# EUROPÄISCHE PATENTANMELDUNG

(11) **EP 4 841 078 A1**
(43) Veröffentlichungstag der Anmeldung: **18.11.2026**
(21) Anmeldenummer: 26177470.7
(22) Anmeldetag: 08.05.2026
(51) Int. Cl.: F01L 1/047, B60K 17/24, F01L 1/053, F16C 35/04

(54) **NOCKENWELLENEINRICHTUNG UND HAUBENMODUL**

(30) Priorität: 15.05.2025 DE 102025118919
(71) Anmelder: thyssenkrupp Dynamic Components GmbH, 38871 Ilsenburg (Harz) (DE); thyssenkrupp AG, 45143 Essen (DE)
(72) Erfinder: SCHIRMER, Jens, 09117 Chemnitz (DE)
(74) Vertreter: thyssenkrupp Bilstein GmbH

(57) **Zusammenfassung**

Die vorliegende Erfindung betrifft eine Nockenwelleneinrichtung, umfassend eine Nockenwelle (1) und mindestens eine Lagereinrichtung (2), wobei die Lagereinrichtung ein Wälzlager (23) zur drehbaren Lagerung der Nockenwelle (1), sowie einen ersten Lagerhalter (21) und einen zweiten Lagerhalter (22) umfasst, die dazu eingerichtet sind, das Wälzlager (23) zwischen sich einzuklemmen, wobei einer der Lagerhalter als Blechlasche (22') ausgestaltet ist. Ferner betrifft die vorliegende Erfindung ein Haubenmodul oder Zylinderkopf mit einer erfindungsgemäßen Nockenwelleneinrichtung.

## Beschreibung

Die vorliegende Erfindung betrifft eine Nockenwelleneinrichtung gemäß dem Oberbegriff des Anspruchs 1, sowie ein Haubenmodul oder Zylinderkopf gemäß dem Oberbegriff des Anspruchs 11.

Nockenwellen dienen in der Regel der Steuerung der Gaswechselventile eines Motors und sind hohen mechanischen sowie thermischen Belastungen ausgesetzt.

Die Nockenwelle wird beispielsweise in einem Haubenmodul, welches die Nockenwelle samt Lagerung oberhalb des Zylinderkopfs trägt, oder auf dem Zylinderkopf selbst drehbar gelagert.

Die Lagerung der Nockenwelle erfolgt in der Regel durch Lagereinrichtungen, jeweils umfassend ein Wälzlager, insbesondere Nadellager, einen ersten Lagerhalter und einen zweiten Lagerhalter. Die Lagerhalter bilden zwischen sich eine Halterung für das Wälzlager aus, in dem wiederum die Nockenwelle drehbar gelagert ist. Hierzu umfassen die Lagerhalter jeweils halbzylinderförmige Aussparungen in denen das Wälzlager, insbesondere der Außenring des Wälzlagers, ausgenommen ist.

Die erste Lagerhalter wird in der Regel durch das Haubenmodul oder den Zylinderkopf selbst ausgebildet, während der zweite Lagerhalter auf den ersten Lagerhalter aufgebracht, insbesondere aufgeschraubt, wird.

Sowohl die Montage der Lagereinrichtung als auch die in der Regel unterschiedlichen Materialien von Lagerhaltern, Wälzlagern und Nockenwelle können herausfordernd sein.

Der in der Regel aus Aluminium ausgebildete zweite Lagerhalter ist als gefräßtes Formteil ausgestaltet und weist neben Bohrungen für eine Verschraubung die oben bereits skizzierte Aussparung zur Aufnahme des Wälzlagers auf. Es ist einsichtig, dass hier ein radialer Formschluss zu dem Wälzlager, insbesondere dem Außenring des Wälzlagers, hergestellt werden muss. Entsprechend muss die Aussparung in dem Lagerhalter genau an den Außenring angepasst sein. Dies muss sowohl bei der Herstellung, als auch bei der Montage des Lagerhalters sehr genau ausgeführt werden. Entsprechend gestaltet sich der Herstellungs-, als auch der Montageprozess sehr anspruchsvoll. Der aufgeschraubte Lagerhalter muss dazu in einem separaten Gusswerkzeug hergestellt werden und ist nach dem gemeinsamen Spindeln zur entsprechenden Zylinderkopfposition gepaart. Gusswerkzeug, montiertes Spindeln und zugehörige Demontage zum Einlegen der Nockenwelle und darüber hinaus ein gemeinsames Handling der gepaarten Komponenten bis zur Nockenwellenmontage ist aufwendig und teuer.

Auch führt beispielsweise der Einsatz von Aluminiumteilen in Kombination mit Stahlkomponenten (z.B. der Nockenwelle oder dem Nadellager) zu Problemen aufgrund unterschiedlicher thermischer Ausdehnungskoeffizienten. Um thermisch bedingtes Klemmen oder übermäßiges Lagerspiel zu vermeiden, müssen große Toleranzen, insbesondere bei der Lagereinrichtung, vorgesehen werden. Dies kann wiederum zu unerwünschten NVH-Effekten (Noise, Vibration, Harshness) während des Motorbetriebs führen.

Insbesondere bei Schiebenockenwellen, die zusätzliche axiale Bewegungsmöglichkeiten besitzen, stellen sich erhöhte Anforderungen an die Lagergeometrie, -steifigkeit sowie an Reibungsarmut und thermische Kompensation.

Die der vorliegenden Erfindung zugrunde liegende Aufgabe besteht darin, eine Nockenwelleneinrichtung bereitzustellen, die eine einfache und kosteneffiziente Montage erlaubt, gleichzeitig ein reduziertes Lagerspiel aufweist und thermisch bedingte Einflüsse auf die Lagerfunktion minimiert. Ferner soll durch die Gestaltung der Lagereinrichtung eine Verbesserung des NVH-Verhaltens erreicht und der Fertigungs- und Montageaufwand reduziert werden.

Diese Aufgabe wird durch eine Nockenwelleneinrichtung mit den Merkmalen des kennzeichnenden Teils des Anspruchs 1 gelöst. Dadurch, dass einer der Lagerhalter als Blechlasche ausgestaltet ist, wird eine besonders einfache, leichte und montagefreundliche Konstruktion der Lagereinrichtung geschaffen. Die Blechlasche kann als separates, dünnwandiges Bauteil gefertigt werden und ersetzt herkömmliche, aufwendig zu bearbeitende Lagerdeckel aus Aluminium. Sie ermöglicht eine kraftschlüssige, insbesondere auch formschlüssige, Fixierung des Wälzlageraußenrings, ohne dabei selbst tragende Funktionen hinsichtlich der vom Ventiltrieb eingeleiteten Kräfte übernehmen zu müssen.

Dies erlaubt eine Trennung von Lastführung und Fixierung, wodurch die mechanischen Anforderungen an die Blechlasche reduziert und die Gestaltungsmöglichkeiten erweitert werden. Die Blechlasche kann darüber hinaus aus einem Material mit einem zur Wälzlagerkomponente ähnlichen Wärmeausdehnungskoeffizienten bestehen, wodurch temperaturbedingte Maßänderungen minimiert und ein konstanteres Lagerspiel erzielt werden. Die maßlichen Änderung zwischen Lageraußenring und der als Blechlasche ausgestalteten Lagerhalter sind geringer. Der Lageraußenring und der als Blechlasche ausgestalteten Lagerhalter dehnen sich nahezu gleich aus. Dies führt zu einer Reduzierung von Reibungsverlusten sowie zu einer Verbesserung des NVH-Verhaltens.

Zudem erlaubt die modulare Ausführung als montierbare Blechlasche die automatisierte Zuführung als Schüttgut und reduziert die Komplexität bei Fertigung, Logistik und Montage. Im Ergebnis werden sowohl die Produktionskosten gesenkt als auch die Funktionssicherheit der Lagerung über einen breiten Temperaturbereich erhöht.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass die Blechlasche zwei Bohrungen zur Schraubbefestigung aufweist. Dadurch kann die Blechlasche einfach und positionssicher am haubenseitigen Lagerhalter verschraubt werden, was eine präzise Fixierung des Wälzlageraußenrings und eine spielfreie Lagerung der Nockenwelle unterstützt.

In einer weiteren vorteilhaften Ausgestaltung der Erfindung kann vorgesehen sein, dass die Blechlasche das Wälzlager in einem Umfangsbereich von weniger als 180° formschlüssig aufnimmt. Hierdurch entsteht beim Anziehen der Verschraubung ein gezielter Kraftschluss auf den Außenring des Wälzlagers, was ein unerwünschtes Mitdrehen verhindert und eine dauerhafte, spielfreie Lagerung gewährleistet. Es kann insbesondere gewährleistet werden, dass die Blechlasche vorgespannt montiert wird und damit "in Form gezogen wird". Das Blech hat demnach nur in Zugrichtung die notwendige Steifigkeit und schmiegt sich bei Montage an das Wälzlager an. Maßliche Ungleichheiten der Einzelteile werden somit während des Montageprozesses egalisiert.

In einer weiteren vorteilhaften Ausgestaltung der Erfindung kann vorgesehen sein, dass der erste Lagerhalter das Wälzlager in einem Umfangsbereich von höchstens 180° aufnimmt. Dies ermöglicht eine einfache und einstückige Integration des Lagerhalters in das Haubenmodul und reduziert den Bearbeitungsaufwand bei gleichzeitig ausreichender Lagerführung.

In einer weiteren vorteilhaften Ausgestaltung der Erfindung kann vorgesehen sein, dass die Blechlasche mit mindestens einem Zusatzelement versehen ist, das zur Verlängerung der Schraubenklemmlänge oder zur Erhöhung der axialsymmetrischen Fixierkraft dient. Hierdurch wird die Kraftübertragung von der Schraube auf den Lagerbereich optimiert, was die Stabilität der Verbindung erhöht und das Risiko lokaler Verformungen reduziert. Weiterhin kann somit Bauraum für den Schraubenkopf geschaffen werden.

In einer weiteren vorteilhaften Ausgestaltung der Erfindung kann vorgesehen sein, dass das Zusatzelement als Formelement oder als geprägte Struktur ausgestaltet ist. Dies erlaubt eine konstruktiv einfache, aber funktionell wirksame Verstärkung der Klemmzone, wodurch die Lagerung mechanisch robuster und langlebiger ausgeführt werden kann. Eine geprägte Struktur ist hierbei eine gezielt plastisch verformte Geometrie, die in das Blechbauteil - wie hier die Blechlasche - durch Umformtechnik (Prägen) eingebracht wird. Dabei wird das Material nicht abgetragen, sondern durch Druck in eine bestimmte Form gebracht. Das Formelement ist hier als separates, eher zylinderförmiges Element ausgestaltet.

In einer weiteren vorteilhaften Ausgestaltung der Erfindung kann vorgesehen sein, dass die Blechlasche federelastisch ausgeführt ist, wobei die Federelastizität insbesondere durch Materialwahl und/oder eine gewölbte oder segmentierte Form erreicht wird. Dies ermöglicht eine temperaturunabhängige Vorspannung des Lagers und verbessert die Kompensation von Toleranzen sowie die Schwingungsdämpfung im Betrieb.

In einer weiteren vorteilhaften Ausgestaltung der Erfindung kann vorgesehen sein, dass das Wälzlager einen Außenring umfasst und die Blechlasche aus einem Werkstoff mit einem dem Außenring entsprechenden Wärmeausdehnungskoeffizienten besteht. Dies reduziert maßliche Änderungen zwischen den Bauteilen bei Temperaturschwankungen und verhindert dadurch temperaturbedingte Lockerungen oder Verklemmungen. Die maßlichen Änderung zwischen Lageraußenring und Blechlasche sind geringer, insbesondere da sich Lageraußenring und Blechlasche nahezu gleich ausdehnen.

In einer weiteren vorteilhaften Ausgestaltung der Erfindung kann vorgesehen sein, dass das Wälzlager als Nadellager ausgestaltet ist. Nadellager ermöglichen eine kompakte Bauweise bei gleichzeitig hoher Tragfähigkeit, wodurch sich die Erfindung auch bei beengten Bauräumen einsetzen lässt.

In einer weiteren vorteilhaften Ausgestaltung der Erfindung kann vorgesehen sein, dass die Nockenwelle als Schiebenockenwelle mit axial beweglichen Nocken ausgebildet ist. Die erfindungsgemäße Lagerung unterstützt hierbei die Anforderungen an axial verschiebbare Elemente, da sie eine dauerhaft präzise und spielfreie Führung der Nocken ermöglicht.

In einer weiteren vorteilhaften Ausgestaltung der Erfindung kann vorgesehen sein, dass der erste Lagerhalter als haubenseitiger Lagerhalter einstückig mit dem Haubenmodul ausgebildet ist. Dadurch verringert sich die Anzahl der Bauteile sowie der Montageaufwand, was sich positiv auf Fertigungszeit, Kosten und Zuverlässigkeit auswirkt.

In einer weiteren vorteilhaften Ausgestaltung der Erfindung kann vorgesehen sein, dass die Blechlasche als zweiter Lagerhalter ausschließlich auf der lastfreien Seite des Wälzlagers angeordnet ist. Dies reduziert die Anforderungen an Festigkeit und Stabilität des Bauteils und erlaubt eine materialsparende und kosteneffiziente Auslegung.

Die vorliegende Erfindung betrifft ferner ein Haubenmodul mit einer Nockenwelleneinrichtung. Dabei besteht die erfindungsgemäße Aufgabe insbesondere darin, die technischen und wirtschaftlichen Vorteile der beschriebenen Nockenwelleneinrichtung - insbesondere die der als Blechlasche ausgestalteten Lagerhalter - in einem Haubenmodul gezielt nutzbar zu machen.

Erfindungsgemäß wird diese Aufgabe durch ein Haubenmodul mit den kennzeichnenden Merkmalen des Anspruchs 11 gelöst.

Durch die Integration der erfindungsgemäßen Nockenwelleneirichtung in das Haubenmodul kann eine bauraumoptimierte, montagefreundliche und kostenreduzierte Baugruppe geschaffen werden, bei der insbesondere die Anzahl an Einzelteilen, die Komplexität der Montage und der Bearbeitungsaufwand reduziert werden.

Ein besonderer Vorteil ergibt sich daraus, dass der erste Lagerhalter - also der haubenseitige Lagerhalter - einstückig mit dem Haubenmodul ausgebildet sein kann. Dies ermöglicht eine werkstoffhomogene und geometrisch präzise Gestaltung der Lagerstelle, reduziert Fertigungstoleranzen und vermeidet zusätzliche Schnittstellen.

Durch die Kombination mit einer als Blechlasche ausgestalteten zweiten Lagerhälfte kann eine vollständige, spielfreie Fixierung des Wälzlagers realisiert werden, ohne dass eine massive Lagerbrücke oder ein aufwendig bearbeiteter Aluminiumdeckel erforderlich ist.

Insbesondere bei modernen Haubenmodulen, die bereits als Funktionseinheit für die Ventilsteuerung vorgesehen sind, erlaubt die erfindungsgemäße Ausgestaltung eine besonders kompakte Bauweise, bei gleichzeitig hoher mechanischer Belastbarkeit und thermischer Stabilität der Lagerung. Darüber hinaus reduziert sich das Risiko temperaturbedingter Ausdehnungskonflikte zwischen Aluminium und Stahl, da die Lagerkräfte gezielt in die steife Haubenstruktur eingeleitet werden, während die Blechlasche primär der Fixierung dient.

Somit trägt das Haubenmodul mit integrierter Nockenwelleneinrichtung gemäß der Erfindung dazu bei, Bauraum, Gewicht und Fertigungskosten zu verringern und gleichzeitig die Funktionssicherheit der Lagerung über die gesamte Lebensdauer des Motors hinweg zu verbessern.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Die Gegenstände bzw. Merkmale der verschiedenen Ausführungsbeispiele können grundsätzlich beliebig miteinander kombiniert werden.

Darin zeigen:
- Fig. 1: eine Nockenwelleneinrichtung gemäß dem Stand der Technik als Teil eines Haubenmoduls in einer perspektivischen Ansicht;
- Fig. 2: eine Nockenwelleneinrichtung gemäß dem Stand der Technik als Teil eines Haubenmoduls in einer Explosionsdarstellung;
- Fig. 3: eine Nockenwelleneinrichtung gemäß dem Stand der Technik als Teil eines Haubenmoduls in einer geschnittenen Ansicht;
- Fig. 4: eine Nockenwelleneinrichtung gemäß dem Stand der Technik als Teil eines Haubenmoduls in einer geschnittenen Ansicht mit Teilen des Ventiltriebs eines Verbrennungsmotors;
- Fig. 5: eine erfindungsgemäße Nockenwelleneinrichtung als Teil eines erfindungsgemäßen Haubenmoduls in einer perspektivische Ansicht;
- Fig. 6: eine erfindungsgemäße Nockenwelleneinrichtung als Teil eines erfindungsgemäßen Haubenmoduls in einer Explosionsdarstellung;
- Fig. 7: eine erfindungsgemäße Nockenwelleneinrichtung als Teil eines erfindungsgemäßen Haubenmoduls in einer geschnittenen Ansicht;
- Fig. 8: eine erfindungsgemäße Nockenwelleneinrichtung als Teil eines erfindungsgemäßen Haubenmoduls in einer geschnittenen Ansicht mit einem Zusatzelement für die Klemmung;
- Fig. 9: eine erfindungsgemäße Nockenwelleneinrichtung als Teil eines erfindungsgemäßen Haubenmoduls in einer geschnittenen Ansicht mit einer Wölbung der Blechlasche;
- Fig. 10: eine erfindungsgemäße Nockenwelleneinrichtung als Teil eines erfindungsgemäßen Haubenmoduls in einer geschnittenen Ansicht mit einer Segmentierung der Blechlasche;
- Fig. 11: eine erfindungsgemäße Nockenwelleneinrichtung mit einer Schiebenockenwelle als Teil eines erfindungsgemäßen Haubenmoduls in einer perspektivischen Ansicht;
- Fig. 12: eine erfindungsgemäße Nockenwelleneinrichtung mit einer Schiebenockenwelle als Teil eines erfindungsgemäßen Haubenmoduls in einer Explosionsdarstellung;
- Fig. 13: eine schematische Darstellung eines erfindungsgemäßen Zylinderkopfes mit einer erfindungsgemäßen Nockenwelleneinrichtung.

Folgende Bezugszeichen werden in den Abbildungen verwendet:
- H: Haubenmodul
- V: Ventiltrieb
- Z: Zylinderkopf
- F: Kraft

- α: Umfangsbereich (Umschlingungswinkel) erster Lagerhalter
- β: Umfangsbereich (Umschlingungswinkel) zweiter, als Blechlasche ausgestalteter Lagerhalter

- 1: Nockenwelle
- 2: Lagereinrichtung
- 11: Schiebenocken
- 21: erster Lagerhalter / haubenseitiger bzw. zylinderkopfseitiger Lagerhalter
- 22: zweiter Lagerhalter / montierbarer Lagerhalter (Stand der Technik)
- 22´: als Blechlasche ausgestalteter Lagerhalter / zweiter Lagerhalter / montierbarer Lagerhalter
- 23: Wälzlager

- 221: Bohrung zur Schraubbefestigung / Schraube
- 222: Zusatzelement
- 223: Wölbung
- 224: Segmentierung

- 231: Außenring des Wälzlagers

Dabei gelten Merkmale und Details, die im Zusammenhang mit einem Verfahren beschrieben sind, selbstverständlich auch im Zusammenhang mit der erfindungsgemäßen Vorrichtung und umgekehrt, sodass bezüglich der Offenbarung zu den einzelnen Erfindungsaspekten stets wechselseitig Bezug genommen wird bzw. werden kann. Außerdem kann ein ggf. beschriebenes erfindungsgemäßes Verfahren mit der erfindungsgemäßen Vorrichtung durchgeführt werden.

Die hierin verwendete Terminologie dient nur zum Zweck des Beschreibens bestimmter Ausführungsformen und soll die Offenbarung nicht beschränken. Wie hierin verwendet, sollen die Singularformen "ein/eine" und "der/die/das" auch die Pluralformen enthalten, sofern der Kontext dies nicht anderweitig klar erkennen lässt. Es wird zudem klar sein, dass die Ausdrücke "weist auf" und/oder "aufweisend", wenn in dieser Beschreibung verwendet, das Vorhandensein der genannten Merkmale, ganzen Zahlen, Schritte, Operationen, Elemente und/oder Bauteile spezifizieren, aber nicht das Vorhandensein oder den Zusatz von einem/einer oder mehreren anderen Merkmalen, ganzen Zahlen, Schritten, Operationen, Elementen, Bauteilen und/oder Gruppen derselben ausschließen. Wie hierin verwendet, enthält der Ausdruck "und/oder" jedes beliebige und alle Kombinationen von einem oder mehreren der assoziierten, aufgelisteten Elemente.

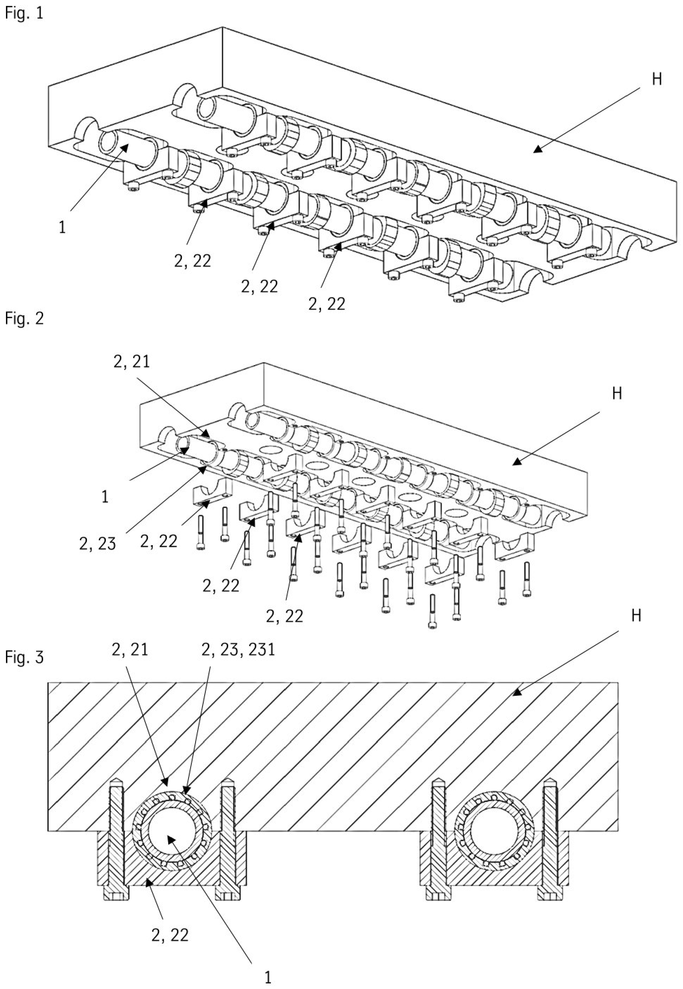

Nachfolgend wird auf die Fig. 1 bis 4 Bezug genommen.

Eine Nockenwelleneinrichtung gemäß dem Stand der Technik umfasst im Wesentlichen eine Nockenwelle 1 und mindestens eine Lagereinrichtung 2. Vorzugsweise umfasst die Nockenwelleneinrichtung mehrere Lagereinrichtungen 2 zur drehbaren Lagerung der Nockenwelle 1.

Die Lagereinrichtungen 2 sind zur drehbaren Aufnahme der Nockenwelle 1, beispielsweise in einem Haubenmodul H oder auf einem Zylinderkopf, eingerichtet. Die Unterschiede zwischen Haubenmodul H und Zylinderkopf sind dem Fachmann hinreichend bekannt. Lediglich kursorisch soll nachfolgend eine Übersicht gegeben werden.

Ein Haubenmodul H, auch als "Cam Carrier" bezeichnet, ist ein Bauteil, das die Nockenwellen 1 samt deren Lagerung aufnimmt und oberhalb des Zylinderkopfs eines Verbrennungsmotors angeordnet ist. Während der Zylinderkopf selbst den Brennraum abschließt, übernimmt das Haubenmodul H die Funktion der Lagerung der Nockenwellen 1 und die Integration des Ventiltriebs V. Im Gegensatz dazu werden bei einem klassischen Zylinderkopf ohne Haubenmodul H die Nockenwellen 1 direkt im Zylinderkopf gelagert; der obere Abschluss erfolgt dort lediglich über einen Ventildeckel.

In den Abbildungen sind stets zwei Nockenwellen 1 in einem Haubenmodul aufgenommen, was jedoch lediglich eine Ausführungsform darstellt. Für die nachfolgenden Erläuterungen wird auf eine Nockenwelle Bezug genommen.

Die Lagereinrichtung 2 umfasst im Wesentlichen einen ersten Lagerhalter 21, einen zweiten Lagerhalter 22 und ein Wälzlager 23, insbesondere ein Nadellager.

Der erste Lagerhalter 21 und der zweite Lagerhalter 22 weisen jeweils eine halbzylinderförmige Aufnahme auf. Die beiden Lagerhalter 21, 22 bilden entsprechend eine zylinderförmige Aufnahme aus, in der das Wälzlager 23 für die Nockenwelle 1 aufgenommen ist. Die Nockenwelle 1 selbst ist in dem Wälzlager 23 drehbar aufgenommen.

Der erste Lagerhalter 21 wird in der Regel durch das Haubenmodul H oder den Zylinderkopf selbst ausgebildet. Oder mit anderen Worten ist vorzugsweise vorgesehen, dass der erste Lagerhalter 21 einstückig mit dem Haubenmodul H bzw. Zylinderkopf ausgebildet ist. Zur Vereinfachung der Beschreibung wird nachfolgend auf das Haubenmodul H Bezug genommen. Die Anordnung auf dem Zylinderkopf ist prinzipiell die Gleiche.

Der zweite Lagerhalter 22 wird in der Regel mit zwei Schrauben, jeweils an den Enden des zweiten Lagerhalters 22, auf den ersten Lagerhalter 21 aufgebracht und dort fixiert. Zur einfacheren Zuordnung soll von einem haubenseitigen Lagerhalter 21 und einem montierbaren Lagerhalter 22 gesprochen werden.

Entsprechend der Anzahl der benötigten Lagereinrichtungen 2 für die Nockenwelle 1 sind entsprechend viele haubenseitige Lagerhalter 21 auf dem Haubenmodul H vorgesehen. Bei der Montage der Nockenwelle 1 wird die mit Wälzlagern 23 ausgestattete Nockenwelle 1 in die haubenseitigen Lagerhalter 21 eingelegt. Anschließend werden die montierbaren Lagerhalter 22 auf die korrespondierenden haubenseitigen Lagerhalter 21 aufgesetzt und mittels der Schrauben fixiert. Die Nockenwelle 1 ist drehbar in dem Haubenmodul H aufgenommen.

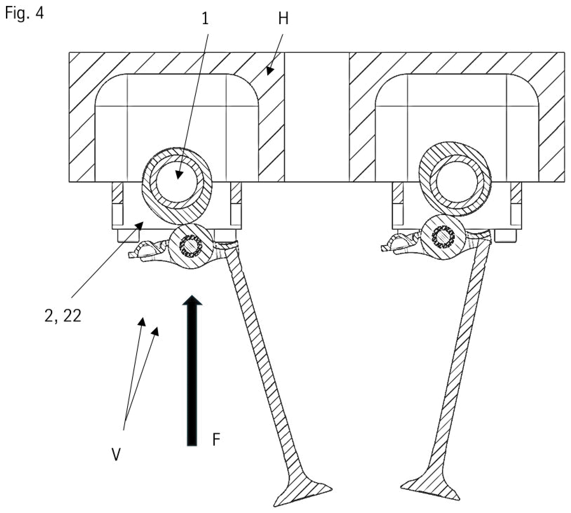

In der Fig. 4 ist ein Haubenmodul H mit einer Nockenwelleneinrichtung dargestellt. Das Wälzlager 23 ist hier nicht sichtbar. Es soll lediglich verdeutlicht werden, wie der Ventiltrieb V eines Verbrennungsmotors zu dem Haubenmodul H, insbesondere der darin aufgenommenen Nockenwelle 1, angeordnet ist. Es ist ersichtlich, dass die von dem Ventiltrieb V aufzunehmende Kraft F in Richtung des Haubenmoduls H und damit des haubenseitigen Lagerhalters 21 ausgerichtet ist.

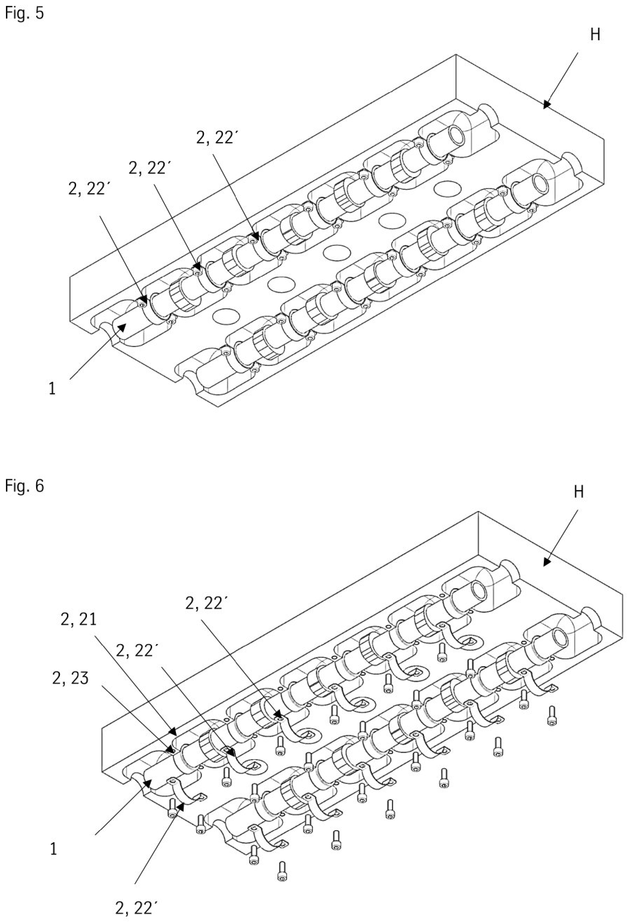

Nachfolgend wird auf die Fig. 5 bis 13 Bezug genommen. Zunächst wird insbesondere auf die Fig. 5 bis 7 Bezug genommen.

Erfindungsgemäß ist vorgesehen, dass die Nockenwelleneinrichtung, insbesondere die mindestens eine Lagereinrichtung 2, einen als Blechlasche ausgestalteten Lagerhalter, insbesondere einen als Blechlasche 22´ ausgestalteten montierbaren Lagerhalter umfasst. Oder mit anderen Worten ist vorgesehen, dass der montierbare Lagerhalter 22´ als Blechlasche ausgestaltet ist. Zur besseren Unterscheidung soll der als Blechlasche ausgestaltete Lagerhalter mit dem Bezugszeichen 22´ bezeichnet werden.

Die Blechlasche 22´ ist damit Bestandteil der Lagereinrichtung 2 zur Aufnahme des Wälzlagers 23, insbesondere des Nadellagers, in dem die Nockenwelle 1 drehbar gelagert ist.

Die Blechlasche 22´ weist zwei Bohrungen 221 zur Schraubbefestigung auf. Die Befestigung erfolgt bevorzugt mit zwei Schrauben, die in unmittelbarer Nähe zur Lagerstelle angeordnet sind, um eine hohe Klemmwirkung auf den Außenring 231 des Nadellagers 23 zu erzielen.

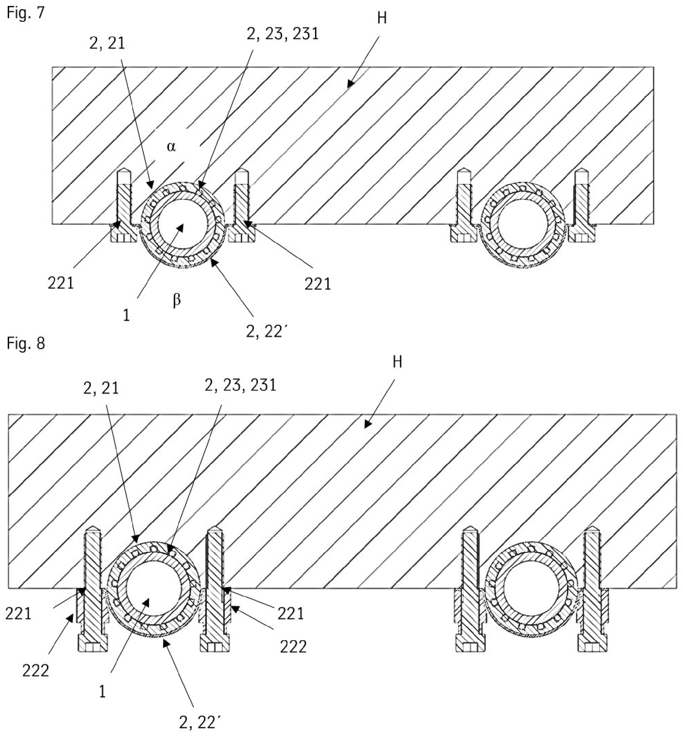

Wie bereits oben dargestellt, nimmt der haubenseitige Lagerhalter 21 den Außenring 231 des Wälzlagers 23 über einen Abschnitt des Umfangs auf, insbesondere in einem Umfangsbereich von höchstens 180°. Der Winkel ist mit dem Bezugszeichen α zur Verdeutlichung in Fig. 7 eingezeichnet.

Die als montierbare Lagerhalter ausgestaltete Blechlasche 22´ ist auf der gegenüberliegenden Seite des haubenseitigen Lagerhalters 21 angeordnet und nimmt den Außenring 231 des Nadellagers 23 ebenfalls in einem Umfangsbereich von höchstens 180° formschlüssig auf. Der Winkel ist mit dem Bezugszeichen β zur Verdeutlichung in Fig. 7 eingezeichnet. Letztendlich kann so eine 360°-Umfassung des Wälzlagers 23 erreicht werden.

Hier kann es jedoch vorteilhaft sein, wenn die Blechlasche 22´ einen Umfangsbereich von kleiner 180° ausbildet, da der aufgenommene Außenring 231 des Wälzlagers 23 beim Verschrauben der Blechlasche 22´ geklemmt werden kann.

Ein weiterer Vorteil ergibt sich hinsichtlich der Fertigung und Montage. Die Blechlasche 22´ ist als loses Bauteil ausgebildet und kann als Schüttgut automatisiert in den Montageprozess eingebracht werden. Die aufwendige Bearbeitung und Vormontage klassischer Aluminiumlagerhalter kann vollständig entfallen. Auch die logistische Handhabung vereinfacht sich, da keine passgenaue Paarung von Lagerhaltern notwendig ist. Darüber hinaus reduziert die geänderte Lagerarchitektur den Bedarf an aktiver Ölversorgung, was zu einem reduzierten Energiebedarf der Ölpumpe beitragen kann.

Besonders vorteilhaft lässt sich der als Blechlasche ausgestaltete montierbare Lagerhalter 22´ in ein Haubenmodul H integrieren, da die Blechlasche 22´ hier nicht die Funktion der krafttragenden Lagerung übernimmt, sondern ausschließlich der Sicherung des Nadellagers 23 dient. Die Belastung aus dem Ventiltrieb wird durch den in der Regel aus Aluminium bestehenden haubenseitigen Lagerhalter 21 aufgenommen. Die Blechlasche 22´ hält das Wälzlager 23 lediglich kraftschlüssig und insbesondere auch formschlüssig in axialer Richtung an Ort und Stelle. Durch die Trennung von Lastaufnahme und Fixierung kann die Blechlasche 22´ in einfacher und materialsparender Bauweise gestaltet werden. Bezüglich der auftretenden Kraftrichtung kann auf die Ausführungen zu Fig. 4 verwiesen werden. Grundsätzlich denkbar ist aber auch der Einsatz der Blechlasche 22´ als montierbarer Lagerhalter in einem Zylinderkopf oder in kombinierten Einheiten aus Haubenmodul und Zylinderkopf. Auch hier kann es vorkommen, dass die aus dem Ventiltrieb stammende Kraft F nicht unmittelbar auf die Blechlasche wirkt, beispielsweise weil ein Teil des Ventiltriebs V oberhalb der Nockenwelle angeordnet ist. Es sind aber auch Anwendungsfälle denkbar in denen Kraft F aus dem Ventiltrieb V auf die Blechlasche einwirkt. Vornehmlich betreffen diese Fälle eine Anordnung der Lagereinrichtung in dem Zylinderkopf. Hier müsste dann von einem zylinderkopfseitigen Lagerhalter 21 und weiterhin von einem montierbaren, als Blechlasche ausgestalteten Lagerhalter 22´ gesprochen werden.

Die Grenzen sind hier fließend, jedoch soll zur Vereinfachung der Beschreibung die Montage in einem Haubenmodul angenommen werden.

Nachfolgend wird insbesondere auf die Fig. 8 Bezug genommen.

In der Fig. 8 ist erkennbar, dass die Blechlasche 22´ mit zwei Zusatzelementen 222 versehen sein kann, die die Klemmwirkung auf den Außenring 231 des Wälzlagers 23 verbessern. Das Zusatzelement 222 ist in der Regel in der Umgebung der Schraubbefestigung integriert und dient der Verlängerung der effektiven Schraubenklemmlänge sowie der Erhöhung der axialsymmetrischen Fixierkraft. Durch diese konstruktive Maßnahme kann die Schraube näher an der eigentlichen Lagerstelle positioniert werden, wodurch die Belastung direkter in die Lagerumgebung eingeleitet wird.

Das Zusatzelement 222 kann dabei ein Verstärkungsabschnitt, ein Formelement oder eine geprägte Struktur sein, die gemeinsam mit der Blechlasche 22´ verschraubt wird und dabei eine definierte Klemmpassung über dem Außenring 231 des Nadellagers 23 erzeugt. Dadurch wird insbesondere bei Schiebenockenwellen mit axialer Bewegung eine dauerhaft spielfreie Lagerung ermöglicht, ohne dass es zu einem Mitdrehen oder axialem Wandern des Außenrings 231 kommt. Die Konstruktion erlaubt es ferner, die erforderliche Montagekraft über eine größere Fläche zu verteilen, was sowohl die Spannungsverteilung verbessert als auch das Risiko lokaler Verformungen reduziert.

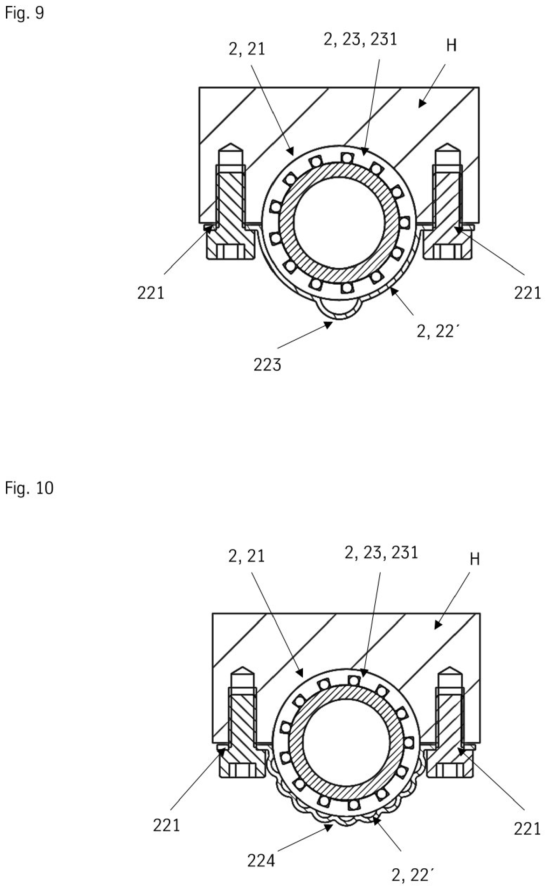

Nachfolgend wird insbesondere auf die Fig. 9 und Fig. 10 Bezug genommen.

Der klemmende Effekt kann auch noch oder auch zusätzlich durch weitere Maßnahmen erreicht werden.

So kann vorgesehen sein, dass die Blechlasche 22´ an sich federelastisch ausgeführt ist. Die Federelastizität kann beispielsweise durch die Materialauswahl der Blechlasche 22´ erreicht bzw. eingestellt werden. Auch kann die Federelastizität durch eine entsprechende Formgebung - beispielsweise gewölbt (Fig. 9 - Wölbung 223) oder segmentiert (Fig. 10 - Segmentierung 224) - erzeugt werden. Diese federnde Ausgestaltung ermöglicht es, das Wälzlager 23 spielfrei oder mit minimalem Spiel zu klemmen, ohne eine thermisch starre Verbindung einzugehen. Dies ist insbesondere vorteilhaft, da der Werkstoff der Blechlasche 22´ - vorzugsweise Stahl - einen Wärmeausdehnungskoeffizienten aufweist, der dem des Außenrings 231 des Wälzlagers 23 entspricht oder zumindest näherungsweise angepasst ist. In Kombination mit dem in der Regel aus Aluminium bestehenden haubenseitigen Lagerhalter 21 wird so eine temperaturkompensierte Lageranordnung geschaffen. Dadurch kann das Lagerspiel über einen weiten Temperaturbereich, insbesondere zwischen -40°C und +140°C, konstant gehalten werden.

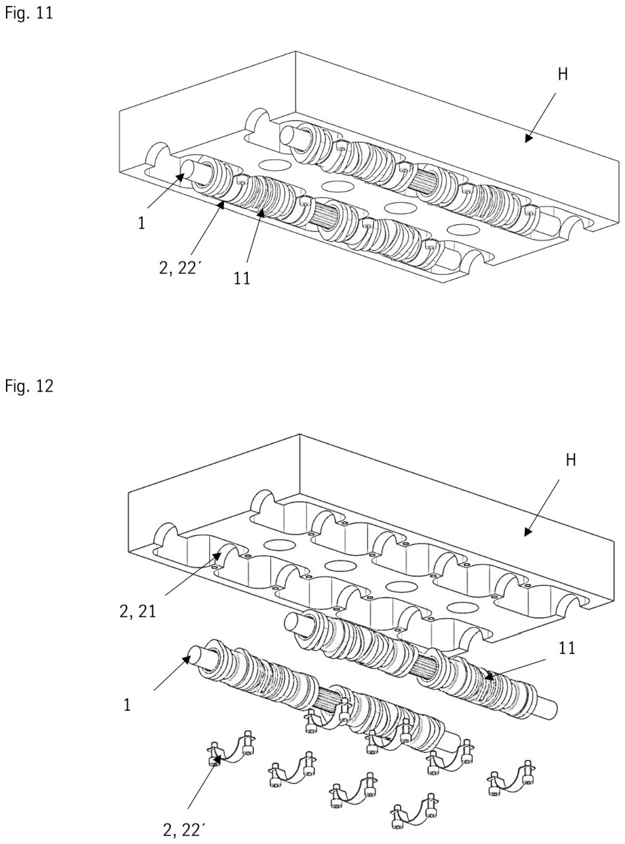

Nachfolgend wird insbesondere auf die Fig. 11 und Fig. 12 Bezug genommen.

Die beschriebene Blechlasche 22´ kann sowohl bei konventionellen Nockenwellen 1 als auch bei sogenannten Schiebenockenwellen, also Nockenwellen 1 mit axial beweglichen Nocken 11 verwendet werden. In beiden Fällen ermöglicht sie eine präzise, thermisch stabile und montagefreundliche Lagerung der Nockenwelle 1 mittels Nadellagerung in einem Haubenmodul H oder Zylinderkopf.

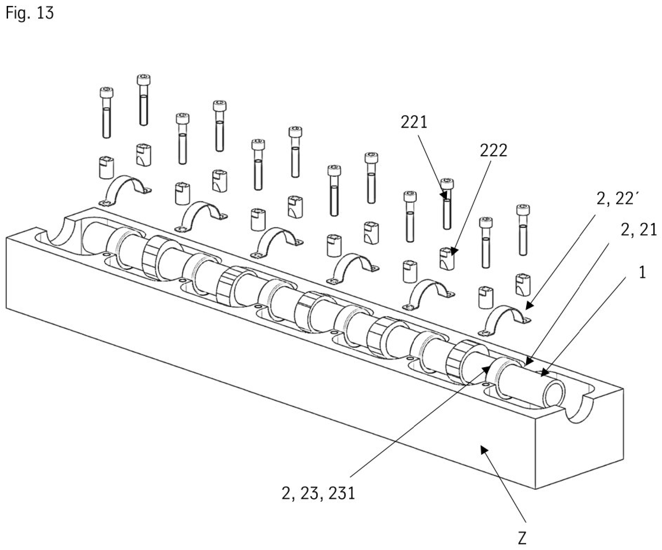

Nachfolgend wird insbesondere auf die Fig. 13 Bezug genommen.

In der Fig. 13 ist ein erfindungsgemäßer Zylinderkopf Z mit einer erfindungsgemäßen Nockenwelleneinrichtung dargestellt. Die Abbildung soll verdeutlichen, dass die erfindungsgemäße Nockenwelleneinrichtung prinzipiell auch in einem Zylinderkopf Z verbaut sein kann.

Grundsätzlich ist die Erfindung nicht auf die oben skizzierten Ausführungsbeispiele beschränkt. Vielmehr sind Variationen denkbar, ohne von der erfinderischen Idee abzuweichen, insbesondere hinsichtlich alternativer Materialien, anderer Geometrien für die Blechlasche, veränderter Montageverfahren oder Anwendungsbereiche.

Es versteht sich, dass hier nur einige ausgewählte Verfahrensschritte dargestellt sind, wie sie für das Verständnis der Montage hilfreich sind. Das Verfahren kann weitere, dem Fachmann bekannte, Schritte bzw. Zwischenschritte umfassen. Dazu zählen das Einlegen der Nockenwelle mit vormontierten Nadellagern, das Positionieren der Welle in den haubenseitigen Lagerbohrungen, das Aufsetzen der Blechlaschen mit integriertem Federelement, das Fixieren der Laschen mit Schrauben sowie die Prüfung des Lagerspiels und der Axialverschieblichkeit der Schiebenocken.

## Patentansprüche

1. Nockenwelleneinrichtung, umfassend eine Nockenwelle (1) und mindestens eine Lagereinrichtung (2), wobei die Lagereinrichtung ein Wälzlager (23) zur drehbaren Lagerung der Nockenwelle (1), sowie einen ersten Lagerhalter (21) und einen zweiten Lagerhalter (22) umfasst, die dazu eingerichtet sind, das Wälzlager (23) zwischen sich einzuklemmen, **dadurch gekennzeichnet, dass** einer der Lagerhalter als Blechlasche (22´) ausgestaltet ist.

2. Nockenwelleneinrichtung nach Anspruch 1, **dadurch gekennzeichnet, dass** die Blechlasche (22´) zwei Bohrungen (221) zur Schraubbefestigung aufweist.

3. Nockenwelleneinrichtung nach einem der vorhergehenden Ansprüche, **dadurch gekennzeichnet, dass** die als zweiter Lagerhalter ausgestaltete Blechlasche (22´) das Wälzlager (23) in einem Umfangsbereich (β) von kleiner 180° formschlüssig aufnimmt.

4. Nockenwelleneinrichtung nach einem der vorhergehenden Ansprüche, **dadurch gekennzeichnet, dass** der erste Lagerhalter (21) das Wälzlager (23) in einem Umfangsbereich (α) von höchstens 180° aufnimmt.

5. Nockenwelleneinrichtung nach einem der vorhergehenden Ansprüche, **dadurch gekennzeichnet, dass** die Blechlasche (22´) mit mindestens einem Zusatzelement (222) versehen ist, das zur Verlängerung der Schraubenklemmlänge oder zur Erhöhung der axialsymmetrischen Fixierkraft dient.

6. Nockenwelleneinrichtung nach Anspruch 5, **dadurch gekennzeichnet, dass** das Zusatzelement als Formelement oder als geprägte Struktur ausgestaltet ist.

7. Nockenwelleneinrichtung nach einem der vorhergehenden Ansprüche, **dadurch gekennzeichnet, dass** die Blechlasche (22´) federelastisch ausgeführt ist, wobei die Federelastizität insbesondere durch die Materialwahl und/oder eine gewölbte oder segmentierte Form der Blechlasche erreicht wird.

8. Nockenwelleneinrichtung nach einem der vorhergehenden Ansprüche, **dadurch gekennzeichnet, dass** das Wälzlager (23) einen Außenring (231) umfasst, wobei die Blechlasche (22´) aus einem Werkstoff mit einem Wärmeausdehnungskoeffizienten besteht, der dem des Außenrings (231) des Wälzlagers (23) entspricht oder angenähert ist.

9. Nockenwelleneinrichtung nach einem der vorhergehenden Ansprüche, **dadurch gekennzeichnet, dass** das Wälzlager (23) als Nadellager ausgestaltet ist.

10. Nockenwelleneinrichtung nach einem der vorhergehenden Ansprüche, **dadurch gekennzeichnet, dass** die Nockenwelle (1) eine Schiebenockenwelle mit axial beweglichen Nocken (11) ist.

11. Haubenmodul (H) oder Zylinderkopf mit einer Nockenwelleneinrichtung nach einem der Ansprüche 1 bis 10, **dadurch gekennzeichnet, dass** der erste Lagerhalter (21) als haubenseitiger bzw. zylinderkopfseitiger Lagerhalter ausgebildet ist, insbesondere einstückig mit dem Haubenmodul (H) bzw. Zylinderkopf ausgebildet ist.

12. Haubenmodul oder Zylinderkopf nach Anspruch 11, **dadurch gekennzeichnet, dass** die Blechlasche (22´) als zweiter Lagerhalter ausschließlich auf der lastfreien Seite des Wälzlagers (23) angeordnet ist.
